# EUROPÄISCHE PATENTSCHRIFT

(11) **EP 0 719 173 B1**
(45) Veröffentlichungstag und Bekanntmachung des Hinweises auf die Patenterteilung: **06.08.1997**
(21) Anmeldenummer: 94926085.5
(22) Anmeldetag: 07.09.1994
(51) Int. Cl.: B01D 41/04

(54) **VORRICHTUNG ZUR REINIGUNG INSBESONDERE VON KRAFTFAHRZEUGLAMELLENFILTERN**
DEVICE FOR CLEANING MOTOR VEHICLE LAMELLAR FILTERS, IN PARTICULAR
DISPOSITIF PERMETTANT DE NETTOYER NOTAMMENT DES FILTRES LAMELLAIRES POUR AUTOMOBILES

(30) Priorität: 13.09.1993 DE 9313819 U; 02.04.1994 DE 4411615
(43) Veröffentlichungstag der Anmeldung: 03.07.1996
(73) Patentinhaber: Stumpp, Thomas, D-75249 Kieselbronn (DE); Haug, Frank, D-75334 Straubenhardt (DE)
(72) Erfinder: Stumpp, Thomas, D-75249 Kieselbronn (DE); Haug, Frank, D-75334 Straubenhardt (DE)
(74) Vertreter: Reinhardt, Harry
(86) Internationale Anmeldenummer: DE9401032
(87) Internationale Veröffentlichungsnummer: WO9507746

(56) Entgegenhaltungen:
- WO-A-92/10268
- DE-A- 3 214 255
- DATABASE WPI Section Ch, Week 9108, Derwent Publications Ltd., London, GB; Class J01, AN 91-054473 & JP,A,3 004 914 (K.KANDA) 10. Januar 1991

## Beschreibung

Die Erfindung betrifft eine Vorrichtung zur Reinigung von Filtern insbesondere von Kraftfahrzeuglamellenfiltern mit den Merkmalen des Anspruches 1.

Aus der DE-A 32 14 255 ist eine derartige Vorrichtung zum Abreinigen von Hohlfiltern für Pulverbeschichtungsanlagen bekannt. Auf der Rohgasseite des Filters, also radial von außen wirkend, werden hierbei mehrere Fegedüsen vorgesehen, die den Schmutz entlang von Mantellinien beseitigen. Ist eine Mantellinie bearbeitet, wird auf die nächste Mantellinie mittels eines Schaltwerkes umgeschaltet. Ergänzend wirkt von innen, also von der Reingasseite eine Druckänderungsvorrichtung, die während des Umschaltens durch das Schaltwerk für einen Moment einen Druckimpulsstoß auslöst. Die in Filterrichtung von der Rohgasseite radial nach innen wirkenden Blasdüsen haben dabei die Aufgabe, die dort niedergeschlagenen Partikel abzufegen, während es auf der Reingasseite, also bei dem Einsatz der Druckänderungsvorrichtung darum geht, einen möglichst großen Austreibdruck von innen nach außen aufzubringen, um im Filtergewebe vorhandene Partikel zurückzutreiben. Insbesondere auf den Seiten 15 und 16 werden dabei weitere Ausführungsformen erläutert wobei es jedoch stets darauf ankommt, kurzzeitig einen Austreibeffekt von innen nach außen zu bewerkstelligen. Selbst wenn dabei eine einzige Düse als Druckänderungsvorrichtung eingesetzt wird, so ist deren Einführen in den Innenraum des Filters, insbesondere bei der Reinigung größerer Mengen von Filtern nur zeitaufwendig zu bewerkstelligen. Weder die Düsen auf der Außen- noch auf der Innenseite des Filters sind allein für sich geeignet, die Reinigung vollständig zu bewerkstelligen, wobei gerade entgegen der Filterrichtung der Filter verstärkt belastet wird, also in einer Richtung, in der der Filter für diese Belastung nicht so dimensioniert ist wie in Filterrichtung. Da aber durch die Druckänderungsvorrichtung die verbleibenden Partikel zurückgetrieben werden sollen, erscheint ein kontinuierlicher Einsatz einer entsprechenden Druckänderungsvorrichtung sinnlos, da ein Zurücktreiben nur dann möglich ist, wenn von der Außenseite bereits das Abfegen der Partikel erfolgt ist. Somit ist nicht nur der Aufbau der Vorrichtung aufwendig, sondern auch die Reinigung an sich ist äußerst zeitaufwendig, da mehrere gesonderte Arbeitsgänge nacheinander erfolgen müssen.

Aus dem DE-U 92 04 148.5 ist eine Vorrichtung zur Reinigung von Erodierfiltern bekannt, bei der zur Mehrfachverwendung von Filtern ein perforiertes Rohr in einer staubdicht abschließbaren Kabine so mit Druckluft beaufschlagt wird, daß aus radialen Austrittsöffnungen des Rohres der austretende Luftstrom die Oberfläche des Erodierfilters beaufschlagt. Die abgeschiedenen Schwermetalle werden über einen Bodenablaß entfernt und Feinstpartikel über eine Abzugsvorrichtung durch die Wand abgezogen. In der Praxis hat sich jedoch gezeigt, daß der durch die Vielzahl der Austrittsöffnungen austretende Luftstrahl nicht ausreichend ist, um die Filter zuverlässig zu reinigen. Um insofern problematische Stellen intensiv zu reinigen ist eine Blasluftpistole vorgesehen, jedoch ist somit für die Reinigung der Filter ein erheblicher weiterer Zeitaufwand erforderlich.

Aus der DE-A 33 36 918.6 ist ferner eine Vorrichtung zum Reinigen von Luftfiltern für Brennkraftmaschinen bekannt, die den Ringfilter in einem Zylindergehäuse reinigt. Im Innern des Filters wird ein allseitig radial zum Ringfilter gerichteter Düsenring einer im Deckel geführten Druckluftleitung abwärts und aufwärts bewegt, so daß der Filter umgekehrt zur Beaufschlagungsrichtung im Gebrauchszustand, also gegen die Filterrichtung, durch die Druckluft beaufschlagt wird. Über einen Bodenabzug werden dabei die entfernten Partikel abgezogen. Es hat sich gezeigt, daß zum einen aufgrund der geringeren Oberfläche, die im Innern des Filters zur Verfügung steht, und aufgrund der auf viele Düsen verteilten Druckluft ein zufriedenstellendes Reinigungsergebnis mit dieser Vorrichtung nicht erreicht werden kann.

Aus der WO-A 92 10 268 ist eine Vorrichtung zum Reinigen eines vertikal eingespannten Filters bekannt, wobei zusammen mit einer Blasluftdüse ein Absaugstutzen für gelöste Schmutzteilchen über die Filterfläche geführt wird. Eine Reinigung mit einer pulsierenden Düse ist nicht vorgesehen.

Aus der JP-A 3004 914 ist ferner eine Reinigungsvorrichtung für einen Luftfilter bekannt, bei der zur Entfernung der Staubteilchen das gefaltete Filtermedium durch Druckluft ausgedehnt werden kann. Auch hier ist eine pulsierende Betriebsweise nicht vorgesehen.

Ausgehend von diesem Stand der Technik liegt der Erfindung die Aufgabe zugrunde, eine Vorrichtung zu schaffen, mit der Filter in umweltschonender Weise zuverlässig so weit gereinigt werden können, daß sie einer erneuten Verwendung zugänglich sind.

Diese Aufgabe wird durch eine Vorrichtung mit den eingangs genannten Merkmalen gelöst.

Die Vorrichtung eignet sich sowohl zur Reinigung von trockenen oder getrockneten Einweg-Lamellenfiltern, um sie nach erfolgter Reinigung einer erneuten Verwendung zuzuführen, als auch zur Reinigung von Einweg- oder Mehrweg-Lamellenfiltern, um diese nach ihrer letztmaligen Verwendung zuverlässig vom Schmutz zu trennen, so daß diese nicht als Sondermüll entsorgt werden müssen. Nach erfolgter Reinigung können die Filter wieder in ihre einzelnen Bestandteile zerlegt und somit vollständig dem Recycling zugeführt werden, was zur Einsparung von Rohstoffen und zur Abfallmengenverringerung beiträgt.

Der Strom oder Strahl eines strömenden Mediums, wie z.B. Luft, tritt nicht mehr über eine Vielzahl von Austrittsöffnungen aus der Druckluftleitung heraus, sondern allenfalls über eine oder wenige Düsen, so daß der gesamte Druck nahezu ungehindert auf die Oberfläche des Filters in der Richtung einströmen kann, in der der Filter im Gebrauchszustand durchströmt wird, also üblicherweise radial von außen. In dieser Filterrichtung ist der Filter auch für diese Belastung dimensioniert. Damit steht dem Luftstrahl eine erheblich größere Oberfläche und damit Angriffsfläche zur Reinigung zur Verfügung als beispielsweise bei einer Beaufschlagung von innen. Um das Reinigungsergebnis zuverlässig zu erhöhen, wird durch vorzugsweise bereits am Druckerzeuger oder im Mündungsbereich der Düse angeordordnete Mittel der Strahl so beeinflußt, daß sich ein pulsierender Strahl ergibt, der beim Auftreffen auf die Oberfläche des Filters zu einer Vibration der Lamellen führt, was den Reinigungseffekt erheblich erhöht, obwohl eine Beaufschlagung in Filterrichtung erfolgt.

Durch den Einsatz der Anlage in einer geschlossenen Kabine wird ein umweltschonendes, in sich geschlossenes Reinigungssystem geschaffen, das weder Bedienungspersonal noch Umgebung mit den vom Filter entfernten Partikeln belastet. Damit werden die grundsätzliche Voraussetzungen für eine Abluftfiltrierung geschaffen, um die Partikel ihrer endgültigen Entsorgung zuzuführen.

Weitere vorteilhafte Ausgestaltungen ergeben sich aus den Unteransprüchen.

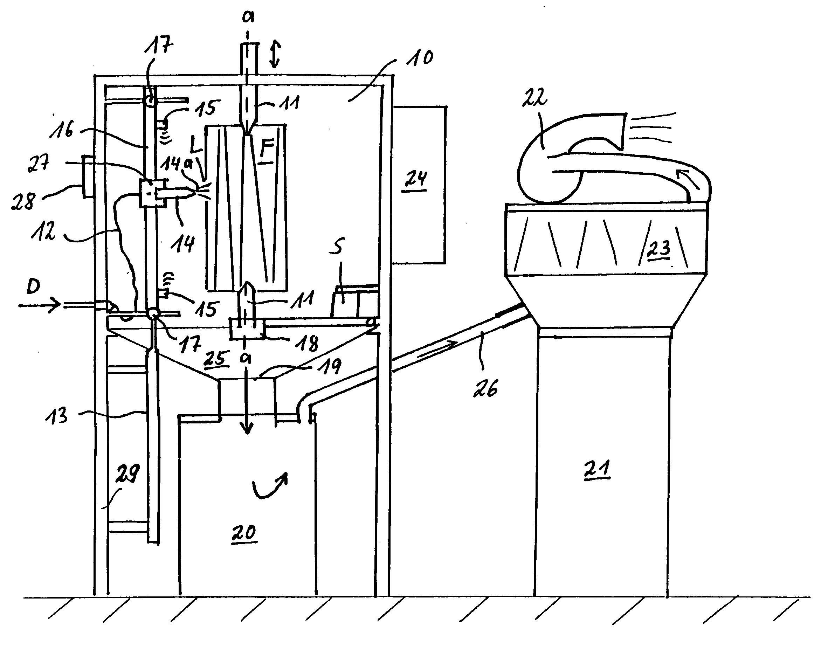

Im folgenden wird die Erfindung an einem in der Zeichnung dargestellten Ausführungsbeispiel näher erläutert. Die einzige Figur zeigt dabei eine schematische Ansicht der Reinigungsvorrichtung.

Die Vorrichtung dient zur Reinigung von Filtern F, insbesondere von Kraftfahrzeuglamellenfiltern, die üblicherweise als trockene oder getrocknete Einweg- und Mehrweglamellenfilter auftreten. Die Vorrichtung besitzt eine staubdicht abschließbare Kabine 10, die durch eine verglaste, vorzugsweise nach vorne über den Griff 28 zu öffnende Türe frei zugänglich ist und auf einem frontseitig offenen Untergestell 29 montiert ist. Die Kabine besitzt Haltemittel 11, die im konkreten Ausführungsbeispiel als Zentrierhalter ausgebildet sind. Stattdessen kann auch eine Haltestange vorgesehen werden, auf die der Filter aufsteckbar ist. Die Haltemittel 11 dienen zur vorübergehenden Festlegung des Filters in der Kabine und sind auf einer Drehachse a-a angeordnet, die in Rotation versetzbar ist. Aus der Figur ergibt sich, daß der obere Zentrierhalter in Pfeilrichtung in die Kabine hinein oder aus dieser heraus bewegbar ist, um den unterschiedlichen Längen der Filter gerecht zu werden.

Quer zur Drehachse ist die Austrittsöffnung oder Mündung 14a einer Düse 14 angeordnet, die über eine flexible Druckluftleitung 12 an den Druckluftanschluß D anschließbar ist. Wenngleich hier und im folgenden stets von Luft als strömenden Medium die Rede ist, so versteht sich von selbst, daß auch andere strömende Medien grundsätzlich einsetzbar sind. Die als strömendes Medium aus der Austrittsöffnung austretende Luft gelangt als Strom L auf die Oberfläche des Filters F. Die Düse 14 ist an einem Düsenhalter 27 angeordnet, der über eine Antriebseinrichtung 13 im wesentlichen parallel zur Achse a-a bewegbar ist. Es ist jedoch für den Erfolg nicht entscheidend, ob sich die Düse gegenüber dem Filter und/oder der Filter gegenüber der Düse bewegt. Die Druckluft, die zum Beispiel aus einem Druckluftkompressor mit 200 l Luftinhalt stammen kann, tritt pulsierend aus der Düsenmündung aus, was an der Auftrittstelle am Filter dazu führt, daß die Lamellen in Vibration versetzt werden, so daß das Reinigungsergebnis erhöht wird. Dieses Pulsieren kann dabei z.B. dadurch erzeugt werden, daß entweder am Drucklufterzeuger oder im Bereich der Düsenmündung Mittel vorgesehen sind, die kontinuierlich den Luftstrom unterbrechen und wieder aufbauen.

Über eine Antriebseinrichtung 13, die im konkreten Ausführungsbeispiel ein Pneumatikzylinder ist, wird die Düse 14 entlang den Lamellen zwischen zwei an die jeweilige Filtergröße anpaßbaren Endschaltern 15 entlang einer Führungsstange 16 bewegt. Die Führungsstange 16 selbst ist über zwei Schnellverstellungen 17 an den jeweiligen Durchmesser des Filters anpaßbar, so daß eine weitreichende Flexibilität der Vorrichtung gewährleistet ist. Sowohl der Rotationsantrieb 18 zur Rotation der Haltemittel 11, als auch die Antriebseinrichtung 13 für die Bewegung der Düse 14 sind in Abhängigkeit von Regelparametern regelbar, die dem jeweils zu reinigenden Filter F angemessen sind und über ein Bedienfeld einer Steuereinheit 24 vorgegeben sind, so daß auf unterschiedliche Filter leicht eingegangen werden kann. Die Kabine 10 verfügt über einen Sammeltrichter 25, der in einem Bodenablaß 19 endet und über den die vom Luftstrom L entfernten Partikel abziehbar sind. Von einer Abzugsvorrichtung 22 werden die entfernten Partikel über einen Grob- und Feinstoffabscheider 23 abgezogen, wobei die abgeschiedenen Stoffe in handelsüblichen Transportbehältern 20,21 abgeschieden werden.

Die Einrichtung arbeitet grundsätzlich folgendermaßen. Nach dem Schließen der Fronttür wird am Bedienfeld der Steuereinheit 24 das entsprechende Reinigungsprogramm gestartet. Je nach Programm erfolgt eine Rotation des Filters F, veranlaßt vom Rotationsantrieb 18 sowie eine Bewegung der Düse 14 entlang der Filterlamellen. Der Filter F dreht sich um seine Längsachse, wobei Drehzahl und Anzahl der Filterumdrehung von der Steuereinheit gesteuert und überwacht sind. Damit die Bewegung der Düse entlang der Führungsstange 16 auf Dauer gesichert ist, sind Manschetten vorgesehen, die einer Verschmutzung entlang der Führungsstange vorbeugen.

Der aus der Düse mit vorzugsweise 5 bis 6 bar, gegebenenfalls jedoch auch mit anderem Druck austretende pulsierende Luftstrom trifft auf die Filteroberfläche und löst dort den Schmutz. Der so gelöste Schmutz wird durch die Abzugsvorrichtung 22 aus der Kabine 10 abgesaugt und in den Grobstoffabscheider geführt. Der Grobstoffabscheider ist durch einen handelsüblichen Transportbehälter 20 gebildet. Die Abzugsvorrichtung zieht jedoch auch die Luft durch den Grobstoffabscheider in Pfeilrichtung durch die Leitung 26 in den Feinstoffabscheider, in dem ein Feinstaubfilter 23 vorgesehen ist, der die Endreinigung der Luft durchführt. Der Feinstaubfilter kann durch einen Abklopfmechanismus gereinigt werden, so daß der verbleibende Reststaub sich in den Transportbehälter 21 zur Entsorgung absetzt. Beide Transportbehälter 20,21 können über handelsübliche Deckel verschlossen werden, so daß zur Entsorgung kein aufwendiges und umweltbelastendes Umfüllen der entfernten Partikel mehr erforderlich ist.

Ergänzend können auch die Halteelemente 11 in Schwingung versetzt werden, um dadurch weitere Partikel abzuschütteln. Zu diesem Zweck können die Halteelemente gegen eine Feder so gelagert werden, daß ein Schwingungserzeuger S zusätzliche Schwingungen aufbringen kann. Als Schwingungen kommen hier beispielsweise Ultraschallschwingungen oder mechanische Schwingungen in Frage.

## Patentansprüche

1. Vorrichtung zur Reinigung von Filtern (F), insbesondere von Kraftfahrzeuglamellenfiltern mit
- einer staubdicht abschließbaren Kabine (10),
- auf einer Drehachse (a-a) angeordneten, in Rotation versetzbaren Haltemitteln (11) zur vorübergehenden Festlegung des Filters (F) in der Kabine,
- wenigstens einer an eine Leitung für ein strömendes Medium anschließbaren, quer zur Drehachse angeordneten Mündung (14a) einer Düse (14), die den austretenden Strom (L) des strömenden Mediums auf eine Oberfläches des Filters lenkt,
- einer Antriebseinrichtung (13), die die Düse (14) gegenüber dem Filter (F) und/oder den Filter (F) gegenüber der Düse (14) parallel zur Drehachse (a-a) bewegt,
wobei der Strom (L) des strömenden Mediums pulsierend aus der Düse austritt und auf den Filter (F) in der Richtung auftrifft, in der der Filter (F) im Gebrauchszustand durchströmt wird.

2. Vorrichtung nach Anspruch 1, dadurch gekennzeichnet, daß der Strom des strömenden Mediums ein pulsierender Luftstrahl ist.

3. Vorrichtung nach einem der Ansprüche 1 oder 2, dadurch gekennzeichnet, daß ein als Antriebseinrichtung (13) ausgebildeter Pneumatikzylinder die Düse (14) entlang der Lamellen des Filters zwischen zwei an die Filtergröße anpaßbaren Endschaltern (15) an einer Führungsstange (16) entlang bewegt.

4. Vorrichtung nach Anspruch 3, dadurch gekennzeichnet, daß die Führungsstange (16) über Mittel zur Schnellverstellung (17) verfügt, um den Abstand der Düse (14) gegenüber der Oberfläche des Filters an den Durchmesser des Filters (F) anzupassen.

5. Vorrichtung nach Anspruch 1, dadurch gekennzeichnet, daß die Haltemittel (11) über einen Schwingungserzeuger (S) Schwingungen unterworfen sind.

6. Vorrichtung nach Anspruch 1, dadurch gekennzeichnet, daß ein Rotationsantrieb (18) zur Rotation der Haltemittel (11) über in Abhängigkeit des zu reinigenden Filters (F) vorgegebene Regelparameter regelbar ist.

7. Vorrichtung nach Anspruch 1, dadurch gekennzeichnet, daß die Antriebseinrichtung (13) über in Abhängigkeit des zu reinigenden Filters (F) vorgegebene Regelparameter regelbar ist.

8. Vorrichtung nach Anspruch 1, dadurch gekennzeichnet, daß die Kabine über einen Bodenablaß (19) verfügt, über den vom Strom des strömenden Mediums entfernte Partikel in handelsübliche Transportbehälter (20,21) abziehbar sind.

9. Vorrichtung nach Anspruch 8, dadurch gekennzeichnet, daß eine Abzugsvorrichtung (22) vorgesehen ist, die die entfernten Partikel über einen Grob- und Feinstoffabscheider abzieht, wobei die abgeschiedenen Stoffe in den handelsüblichen Transportbehältern (20,21) abgeschieden werden.

10. Vorrichtung nach Anspruch 9, dadurch gekennzeichnet, daß im Feinstoffabscheider ein Feinstoffilter (23) vorgesehen ist, der durch einen Abklopfmechanismus reinigbar ist.

## Claims

1. Apparatus for cleaning filters (F), more especially automotive vehicle vane-type filters, having
- a booth (10), which is sealable in a dust-tight manner,
- retaining means (11), which are disposed on a rotary axis (a-a) and can be set in rotation, for the temporary securement of the filter (F) in the booth,
- at least one opening (14a) of a nozzle (14), which guides the emerging flow (L) of the flowing medium onto a surface of the filter, said opening being able to communicate with a line for a flowing medium and being disposed transversely relative to the rotary axis,
- a driving arrangement (13), which moves the nozzle (14) relative to the filter (F) and/or the filter (F) relative to the nozzle (14) parallel to the rotary axis (a-a),
the flow (L) of the flowing medium emerging pulsatingly from the nozzle and encountering the filter (F) in the direction in which the filter (F) is traversed in the position of use.

2. Apparatus according to claim 1, characterised in that the flow of the flowing medium is a pulsating jet of air.

3. Apparatus according to one of claims 1 and 2, characterised in that a pneumatic cylinder, which is configured as the driving arrangement (13), moves the nozzle (14) along the vanes of the filter between two limit switches (15), which can be adapted to the filter size, along a guide rod (16).

4. Apparatus according to claim 3, characterised in that the guide rod (16) has means for quick-action adjustment (17), in order to adapt the spacing between the nozzle (14) and the surface of the filter to the diameter of the filter (F).

5. Apparatus according to claim 1, characterised in that the retaining means (11) are subject to oscillations via an oscillation generator (S).

6. Apparatus according to claim 1, characterised in that a rotary drive (18) for rotating the retaining means (11) can be regulated via regulating parameters prescribed in dependence on the filter (F) to be cleaned.

7. Apparatus according to claim 1, characterised in that the driving arrangement (13) can be regulated via regulating parameters prescribed in dependence on the filter (F) to be cleaned.

8. Apparatus according to claim 1, characterised in that the booth has a base outlet (19), via which particles, which have been removed from the flow of the flowing medium, can be discharged into commercially available containers (20, 21).

9. Apparatus according to claim 8, characterised in that a discharge device (22) is provided, which discharges the removed particles via a coarse and fine material separator, the separated materials being separated in the commercially available containers (20, 21).

10. Apparatus according to claim 9, characterised in that a fine material filter (23) is provided in the fine material separator and is cleanable by means of a tapping mechanism.

## Revendications

1. Dispositif de nettoyage de filtres (F), en particulier de filtres à lamelles pour véhicules automobiles, comportant
- une cabine (10) pouvant être fermée de manière étanche à la poussière,
- des moyens de fixation (11) placés sur un axe de rotation (a-a) et pouvant être mis en rotation destinés à la fixation temporaire du filtre (F) dans la cabine,
- au moins un orifice (14a), placé perpendiculairement à l'axe de rotation et pouvant être raccordé à une conduite pour un fluide en mouvement, d'une buse (14) qui dirige sur une surface du filtre le courant sortant (L) de fluide en mouvement,
- un dispositif moteur (13) qui meut la buse (14) par rapport au filtre (F) et/ou le filtre (F) par rapport à la buse (14) parallèlement à l'axe de rotation (a-a),
le courant (L) de fluide en mouvement sortant de manière pulsée de la buse et rencontrant le filtre (F) dans la direction dans laquelle celui-ci est traversé en service.

2. Dispositif selon la revendication 1, caractérisé par le fait que le courant de fluide en mouvement est un jet d'air pulsé.

3. Dispositif selon l'une des revendications 1 et 2, caractérisé par le fait qu'un vérin pneumatique constituant le dispositif moteur (13) meut la buse (14) le long des lamelles du filtre entre deux interrupteurs de fin de course (15), adaptables à la dimension du filtre, le long d'une tige de guidage (16).

4. Dispositif selon la revendication 3, caractérisé par le fait que la tige de guidage (16) est pourvue de moyens de déplacement rapide (17) pour l'adaptation au diamètre du filtre (F) de la distance entre la buse (14) et la surface du filtre.

5. Dispositif selon la revendication 1, caractérisé par le fait que les moyens de fixation (11) sont soumis à des vibrations par un générateur de vibrations (S).

6. Dispositif selon la revendication 1, caractérisé par le fait qu'une commande de rotation (18) pour la rotation des moyens de fixation (11) est réglable par des paramètres de réglage fixés à l'avance en fonction du filtre à nettoyer (F).

7. Dispositif selon la revendication 1, caractérisé par le fait que le dispositif moteur (13) est réglable par des paramètres de réglage fixés à l'avance en fonction du filtre à nettoyer (F).

8. Dispositif selon la revendication 1, caractérisé par le fait que la cabine comporte un orifice d'évacuation de fond (19) par lequel les particules enlevées du courant de fluide en mouvement peuvent être extraites pour être mises dans des récipients de transport courants (20, 21).

9. Dispositif selon la revendication 8, caractérisé par le fait qu'il est prévu un dispositif d'extraction (22) qui extrait les particules enlevées par l'intermédiaire d'un séparateur de matières grosses et de matières fines, les matières séparées étant déposées dans les récipients de transport courants (20, 21).

10. Dispositif selon la revendication 9, caractérisé par le fait que dans le séparateur de matières fines est prévu un filtre à matières fines (23) qui peut être nettoyé par un mécanisme de percussion.
